(19) Europäisches Patentamt
European Patent Office
Office européen des brevets

(11) **EP 4 787 388 A1**

(12) **EUROPEAN PATENT APPLICATION**
published in accordance with Art. 153(4) EPC

(43) Date of publication:
**05.08.2026 Bulletin 2026/32**

(21) Application number: **24869970.4**

(22) Date of filing: **09.07.2024**

(51) International Patent Classification (IPC):
**G21C 17/02** (2006.01)    **G21C 17/10** (2006.01)

(52) Cooperative Patent Classification (CPC):
**G21C 17/02; G21C 17/10;** Y02E 30/30

(86) International application number:
**PCT/CN2024/104427**

(87) International publication number:
**WO 2025/066414 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.09.2023 CN 202311260292**

(71) Applicants:
• **China Nuclear Power Technology Research Institute Co., Ltd.**
**Shenzhen, Guangdong 518031 (CN)**

• **Ling Ao Nuclear Power Co., Ltd**
**Shenzhen, Guangdong 518000 (CN)**

(72) Inventors:
• **FU, Pengtao**
**Shenzhen, Guangdong 518031 (CN)**
• **LI, Zhijun**
**Shenzhen, Guangdong 518031 (CN)**

(74) Representative: **V.O.**
**P.O. Box 87930**
**2508 DH Den Haag (NL)**

(54) **DETERMINATION METHOD FOR INTEGRITY OF FUEL ELEMENTS IN PRESSURIZED WATER REACTOR**

(57) A determination method for integrity of fuel elements in a pressurized water reactor. The determination method comprises: during operation of a pressurized water reactor, sampling a coolant of the pressurized water reactor to obtain Xe-133 specific activity and Xe-138 specific activity in the coolant sample (S10); on the basis of the Xe-133 specific activity and the Xe-138 specific activity, obtaining a fuel reliability index (S20); and on the basis of the fuel reliability index, determining whether any fuel element in the pressurized water reactor is damaged (S30). Compared with a method for determining integrity of fuel elements on the basis of specific activity of radioactive iodine isotopes, the error rate can be reduced, thereby improving the reliability of the determination result.

During operation of a pressurized water reactor, sampling a coolant of the pressurized water reactor to obtain specific activity of Xe-133 and specific activity of Xe-138 in a coolant sample — S10

Obtaining a fuel reliability index based on the specific activity of Xe-133 and the specific activity of Xe-138 — S20

Determining whether any fuel element in the pressurized water reactor is damaged based on the fuel reliability index — S30

FIG. 1

EP 4 787 388 A1

**Description**

**CROSS-REFERENCE TO RELATED APPLICATIONS**

The present application claims priority to Chinese patent application No. 202311260292.8, filed on September 27, 2023, and entitled "DETERMINATION METHOD FOR INTEGRITY OF FUEL ELEMENTS IN PRESSURIZED WATER REACTOR", the entire content of which is incorporated herein by reference.

**TECHNICAL FIELD**

The present disclosure relates to the field of nuclear power technologies, and in particular, to a method for determining integrity of fuel elements in a pressurized water reactor.

**BACKGROUND**

The integrity of fuel elements (also referred to as fuel rods) is critical to the safety, reliability and economy of pressurized water reactors. During the normal operation of a pressurized water reactor, on a condition that a fuel element is damaged, radioactive fission products accumulated in the fuel cladding will enter the primary loop coolant, resulting in an increased radioactive level in the primary loop, increased effluents, and higher radiation exposure to workers.

During the power operation of the reactor, the reactor core loaded with fuel elements is a high-radiation field filled with neutrons and γ-rays, making it inaccessible to workers. Therefore, how to determine the integrity of the fuel elements during the power operation of the reactor is a challenge at present.

In the related art, some researchers have proposed a method for determining the integrity of fuel elements by monitoring the specific activity of radioactive iodine isotopes in the coolant. However, this method has a high rate of incorrect determination. Therefore, there is an urgent need for a determination method that provides a lower rate of incorrect determination and more reliable determination results.

**SUMMARY**

According to various embodiments of the present disclosure, a method for determining integrity of fuel elements in a pressurized water reactor is provided.

A method for determining the integrity of fuel elements in a pressurized water reactor is provided in the present disclosure. The method includes:

during operation of a pressurized water reactor, sampling a coolant of the pressurized water reactor to obtain specific activity of Xe-133 and specific activity of Xe-138 in a coolant sample;
obtaining a fuel reliability index based on the specific activity of Xe-133 and the specific activity of Xe-138; and
determining whether any fuel element in the pressurized water reactor is damaged based on the fuel reliability index.

In an embodiment, obtaining the fuel reliability index based on the specific activity of Xe-133 and the specific activity of Xe-138 includes:
calculating FRI-XE according to a following formula, and taking the FRI-XE as the fuel reliability index:

$$\text{FRI-XE} = [A_{133} - k_{138} \times A_{138}] \times [(L_n/LHGR) \times (100/P_0)]^{1.5},$$

where

FRI-XE refers to specific activity of Xe-133 in the coolant corrected for contributions of adhered actinides and power level and normalized to a standard linear power density, in MBq/t;
$A_{133}$ refers to specific activity of Xe-133 in the coolant equivalent to a non-degassed operating condition, in MBq/t;
$k_{138}$ refers to a correction coefficient of adhered actinides, dimensionless;
$A_{138}$ refers to specific activity of Xe-138 in the coolant, in MBq/t;
$L_n$ refers to the standard linear power density, taken as 180 W/cm;
*LHGR* refers to an average linear power density of the pressurized water reactor during full-power operation, in W/cm; and

$P_0$ refers to a reactor power when measuring the activity, expressed as a percentage.

In an embodiment, a value of the correction coefficient $k_{138}$ of the adhered actinides is 1.4.

In an embodiment, a value of the correction coefficient $k_{138}$ of the adhered actinides is one of 1.39, 1.41 and 1.42.

In an embodiment, determining whether any fuel element in the pressurized water reactor is damaged based on the fuel reliability index includes:

comparing the fuel reliability index FRI-XE with a predetermined threshold; and
determining that a fuel element in the pressurized water reactor is damaged when the FRI-XE is greater than the predetermined threshold.

In an embodiment, it is determined that no fuel element in the pressurized water reactor is damaged when the FRI-XE is less than or equal to the predetermined threshold.

In an embodiment, the predetermined threshold is 50 MBq/t.

In an embodiment, the method further includes:

comparing the FRI-XE with 50000 MBq/t when the FRI-XE is greater than the predetermined threshold; and
determining that the damage of the fuel elements in the pressurized water reactor is serious on a condition that the FRI-XE is greater than or equal to 50000 MBq/t.

In an embodiment, the method further includes:

comparing the FRI-XE with -50 MBq/t when the FRI-XE is less than or equal to the predetermined threshold; and
determining that no fuel element in the pressurized water reactor is damaged and the degree of actinide contamination of the coolant is low on a condition that the FRI-XE is greater than -50 MBq/t.

In an embodiment, it is determined that no fuel element in the pressurized water reactor is damaged but a degree of actinide contamination of the coolant is high on a condition that the FRI-XE is less than or equal to -50 MBq/t.

In an embodiment, sampling the coolant of the pressurized water reactor includes:

obtaining a unit power of the pressurized water reactor; and
sampling the coolant when the unit power is greater than 80%.

In an embodiment, the method further includes:

recording a unit power of the pressurized water reactor at a sampling moment;
and
determining the coolant sample obtained by a present sampling as a valid sample on a condition that a difference between a presently recorded unit power and a unit power recorded at a previous sampling does not exceed a preset percentage.

In an embodiment, the method further includes determining the coolant sample obtained by the present sampling as an invalid sample on a condition that the difference between the presently recorded unit power and the unit power recorded at the previous sampling exceeds the preset percentage.

In an embodiment, the method further includes determining the coolant sample obtained by the present sampling as a valid sample on a condition that the difference between the two recorded unit powers does not exceed the preset percentage.

In an embodiment, the preset percentage is 5%.

The details of one or more embodiments of the present disclosure are set forth in the accompanying drawings and the description below. Other features, objects and advantages of the present disclosure will become apparent from the specification, the accompanying drawings and the claims.

## BRIEF DESCRIPTION OF THE DRAWINGS

Various other advantages and benefits will become clear to those of ordinary skill in the art upon reading the detailed description of the preferred embodiments below. Meanwhile, to better describe and illustrate the embodiments and/or examples of the inventions disclosed herein, reference may be made to one or more accompanying drawings. Additional details or examples used to describe the accompanying drawings should not be considered as limiting the scope of any of the disclosed inventions, the embodiments and/or examples described at present, and the best mode of these inventions understood at present.

FIG. 1 is a flow diagram illustrating a method for determining integrity of fuel elements in a pressurized water reactor according to one or more embodiments.

FIG. 2 is a schematic diagram illustrating a relationship between a value of FRI-XE and integrity of fuel elements in a pressurized water reactor.

**DETAILED DESCRIPTION OF THE EMBODIMENTS**

The embodiments of the technical solution of the present disclosure will be described in detail below with reference to the accompanying drawings. The following embodiments are only used to explain the technical solution of the present disclosure more clearly, and thus are only examples, and shall not be used to limit the protection scope of the present disclosure thereby.

Unless otherwise defined, all technical and scientific terms used herein have the same meaning as commonly understood by those skilled in the art to which the present disclosure belongs. The terms used herein are only for the purpose of describing specific embodiments and are not intended to limit the present disclosure. The terms "include" and "have" and any variations thereof in the specification, claims and the above description of the accompanying drawings of the present disclosure are intended to cover non-exclusive inclusion.

In the description of the embodiments of the present disclosure, the technical terms "first", "second" and the like are only used to distinguish different objects, and cannot be understood as indicating or implying relative importance, or implicitly indicating the number, specific order or primary-secondary relationship of the indicated technical features. In the description of the embodiments of the present disclosure, the meaning of "a plurality of" is two or more, unless otherwise clearly and specifically defined.

Reference to "an embodiment" herein means that a specific feature, structure or characteristic described in combination with the embodiment may be included in at least one embodiment of the present disclosure. The appearance of the phrase in various positions in the specification does not necessarily refer to the same embodiment, nor is it an independent or alternative embodiment mutually exclusive with other embodiments. Those skilled in the art clearly and implicitly understand that the embodiments described herein may be combined with other embodiments.

In the description of the embodiments of the present disclosure, the term "and/or" is only a relational expression describing associated objects, indicating that three relationships may exist, for example, A and/or B may indicate: A exists alone, A and B exist simultaneously, and B exists alone. In addition, the character "/" herein generally indicates that the associated objects before and after are in an "or" relationship.

In the description of the embodiments of the present disclosure, the term "a plurality of" refers to two or more (including two). Similarly, "a plurality of groups" refers to two or more groups (including two groups), and "a plurality of pieces" refers to two or more pieces (including two pieces).

In the description of the embodiments of the present disclosure, technical terms such as "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial" and "circumferential" are based on the orientation or position relationship shown in the accompanying drawings and are merely intended to facilitate the description of the present disclosure and simplify the description, rather than indicating or implying that the indicated device or element must have a particular orientation or be constructed and operated in a particular orientation, and therefore are not to be interpreted as limiting the present disclosure.

In the description of the embodiments of the present disclosure, unless otherwise clearly specified and limited, technical terms such as "installation", "connection", "connection" and "fixation" should be understood in a broad sense, for example, it may be a fixed connection, a detachable connection or an integral connection; it may also be a mechanical connection or an electrical connection; it may be a direct connection or an indirect connection through an intermediate medium, and may be the internal communication between two elements or the interaction relationship between two elements. For those of ordinary skill in the art, the specific meanings of the above terms in the embodiments of the present disclosure can be understood according to specific situations.

The integrity of fuel elements (also referred to as fuel rods) is critical to the safety, reliability and economy of pressurized water reactors. During a normal operation of a pressurized water reactor, on a condition that a fuel element is damaged, radioactive fission products accumulated in the fuel cladding will enter the primary loop coolant, resulting in an increased radioactive level in the primary loop, increased effluents and increased radiation exposure to workers.

During the power operation of the reactor, a reactor core loaded with fuel elements is a high-radiation field filled with neutrons and $\gamma$-rays, making it inaccessible to workers. Therefore, how to determine the integrity of fuel elements during the power operation of the reactor is a challenge at present.

In the related art, some researchers have proposed a method for determining the integrity of fuel elements by monitoring the specific activity of radioactive iodine isotopes in the coolant.

However, production practice has confirmed that this method has a high rate of incorrect determination. Through extensive research, the inventors of the present disclosure have found that there are two main reasons for the incorrect determination of the above method.

First, when a break of the fuel element is small, the amount of iodine released from the damaged fuel element is very small, which lead to no obvious change in the specific activity of I-131 in the coolant of the pressurized water reactor. In this case, although the fuel element is damaged, it cannot be identified according to the above method.

Second, when the break of the fuel element is large, some of the actinides in the damaged fuel element will be gradually released into the coolant under the continuous erosion by the coolant. The solubility of actinides in the coolant is very low, and most of the actinides released into the coolant will deposit between components of the coolant system and an outer surface of a core fuel and migrate gradually. This will cause radioactive contamination of the coolant system by actinides in multiple subsequent continuous cycles. In this case, the fission products released from the outer surface of the fuel element to the coolant through the recoil mechanism include not only the splashed uranium brought in during the fuel production process, but also the actinides released to the coolant system from the fuel element damaged in the previous cycle. The composition of actinides adhered to the fuel surface will change gradually. However, in a determination formula of the reliability index used in the above method, the correction coefficient k of splashed uranium is usually 0.0318, which corresponds to splashed uranium with 70% Pu-239 and 30% U-235. With the gradual change of the composition of actinides adhered to the fuel surface, the correction coefficient k of splashed uranium is no longer strictly equal to 0.0318. In this case, when the original determination formula of the reliability index is used for determination, the index may exceed the predetermined threshold (corresponding to a determination conclusion that the fuel element is damaged), but in fact, no fuel element in the pressurized water reactor is damaged, thus resulting in incorrect determination.

Based on the above issues, a method for determining integrity of fuel elements in a pressurized water reactor is provided in the embodiments of the present disclosure, aiming to reduce the rate of incorrect determination and improve the reliability of determination results.

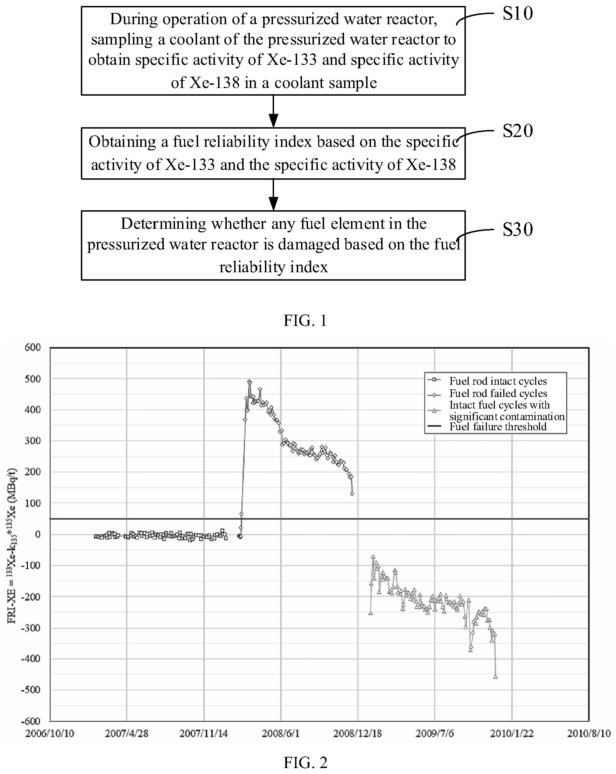

As shown in FIG. 1, the method for determining the integrity of fuel elements in a pressurized water reactor in the embodiment of the present disclosure includes steps S10 to S30.

In step S10, during operation of a pressurized water reactor, a coolant of the pressurized water reactor is sampled to obtain specific activity of Xe-133 and specific activity of Xe-138 in a coolant sample.

In step S20, a fuel reliability index is obtained based on the specific activity of Xe-133 and the specific activity of Xe-138.

In step S30, it is determined whether any fuel element in the pressurized water reactor is damaged based on the fuel reliability index.

According to the method for determining the integrity of fuel elements in a pressurized water reactor in the embodiment of the present disclosure, the fuel reliability index is obtained through the specific activities of the inert gas nuclides Xe-133 and Xe-138, so as to determine the integrity of fuel elements in the pressurized water reactor. Xe-133 has a half-life of 5.25 days and is the radionuclide among inert gas nuclides that can best characterize the radioactive species released into the coolant via diffusion from damaged fuel elements. Xe-138 has a half-life of 14.1 minutes and is the radionuclide among inert gas nuclides that can best characterize the radioactive species released into the coolant by recoil following fission reactions of adhered actinides. Therefore, in the calculation of the fuel reliability index, it can be conservatively assumed that all Xe-138 in the coolant comes from the recoil release of adhered actinides. Compared with the method for determining the integrity of fuel elements based on the specific activity of radioactive iodine isotopes in the related art, the method for determining the integrity of fuel elements in a pressurized water reactor in the embodiment of the present disclosure can reduce the rate of incorrect determination, thereby improving the reliability of determination results.

In some embodiments of the present disclosure, obtaining the fuel reliability index based on the specific activity of Xe-133 and the specific activity of Xe-138 includes calculating FRI-XE according to a following formula, and taking the FRI-XE as the fuel reliability index:

$$\text{FRI-XE} = [A_{133} - k_{138} \times A_{138}] \times [(L_n/LHGR) \times (100/P_0)]^{1.5},$$

where FRI-XE refers to specific activity of Xe-133 in the coolant, corrected for contributions of adhered actinides and power level and normalized to a standard linear power density, in MBq/t;

$A_{133}$ refers to specific activity of Xe-133 in the coolant equivalent to a non-degassed operating condition, in MBq/t;

$k_{138}$ refers to a correction coefficient of adhered actinides, dimensionless;

$A_{138}$ refers to specific activity of Xe-138 in the coolant, in MBq/t;

$L_n$ refers to the standard linear power density, taken as 180 W/cm;

*LHGR* refers to an average linear power density of the pressurized water reactor during full-power operation, in W/cm;

and

$P_0$ refers to a reactor power when measuring the activity, expressed as a percentage.

In this embodiment, the fuel reliability index FRI-XE is calculated based on the specific activities of the inert gas nuclides Xe-133 and Xe-138 in the coolant sample. By determining whether any fuel element in the pressurized water reactor is damaged based on the fuel reliability index, the integrity of the fuel element can be determined more accurately, thereby reducing the rate of incorrect determination and improving the reliability of determination results.

In some embodiments of the present disclosure, the value of correction coefficient $k_{138}$ of adhered actinides is 1.4.

It should be noted that the value of $k_{138}$, 1.4, is obtained according to the rounding rule. That is to say, if more than one decimal place is retained, the value of $k_{138}$ can also be a value close to 1.4, such as 1.39, 1.41, 1.42, etc., as long as it rounds to 1.4.

When the value of correction coefficient $k_{138}$ of adhered actinides is 1.4, the influence of adhered actinides can be deducted to a great extent.

In some embodiments of the present disclosure, determining whether any fuel element in the pressurized water reactor is damaged based on the fuel reliability index includes: comparing the fuel reliability index FRI-XE with a predetermined threshold; and determining that a fuel element in the pressurized water reactor is damaged when FRI-XE is greater than the predetermined threshold.

Further, the predetermined threshold is 50 MBq/t. The predetermined threshold may be calculated based on historical data of the pressurized water reactor. That is to say, when no fuel element in the pressurized water reactor is damaged, the value of the fuel reliability index FRI-XE obtained based on the above formula will not exceed 50 MBq/t.

In some embodiments of the present disclosure, the method for determining the integrity of fuel elements in a pressurized water reactor further includes comparing the FRI-XE with 50000 MBq/t when the FRI-XE is greater than the predetermined threshold, and determining that the damage of the fuel elements in the pressurized water reactor is serious on a condition that the FRI-XE is greater than or equal to 50000 MBq/t.

Through calculations based on the historical data of the pressurized water reactor, the inventors found that when a small number of fuel elements in the pressurized water reactor are damaged or a very small number of fuel elements with low power are damaged, the value of the fuel reliability index FRI-XE obtained based on the above formula should not exceed 50000 MBq/t. Therefore, the fuel reliability index FRI-XE can also be used to determine the severity of the damage of fuel elements in the pressurized water reactor.

In some embodiments, it is determined that the damage of the fuel elements in the pressurized water reactor is not serious when the FRI-XE is greater than 50 MBq/t and less than 50000 MBq/t. It is determined that the damage of the fuel elements in the pressurized water reactor is serious when the FRI-XE is greater than or equal to 50000 MBq/t.

In some embodiments of the present disclosure, the method for determining the integrity of fuel elements in a pressurized water reactor further includes:

comparing the FRI-XE with -50 MBq/t when the FRI-XE is less than or equal to the predetermined threshold; determining that no fuel element in the pressurized water reactor is damaged and the degree of actinide contamination of the coolant is low on a condition that the FRI-XE is greater than -50 MBq/t; and determining that no fuel element in the pressurized water reactor is damaged but a degree of actinide contamination of the coolant is high on a condition that the FRI-XE is less than or equal to -50 MBq/t.

Since A138 represents the specific activity of Xe-138 in the coolant, and Xe-138 is the radionuclide that can best characterize the radioactive species released into the coolant by recoil following fission reactions of adhered actinides, it can be seen that the higher the degree of actinide contamination of the coolant, the greater the specific activity of Xe-138, and the smaller the value of the fuel reliability index FRI-XE. Therefore, the fuel reliability index FRI-XE can also be used to determine the degree of actinide contamination of the coolant.

Through a lot of calculation and verification based on the historical data of the pressurized water reactor, the inventors found that when no fuel element in the pressurized water reactor is damaged, the value of the fuel reliability index FRI-XE obtained based on the above formula will not be less than -50 MBq/t when the degree of actinide contamination of the coolant is relatively low. Therefore, as shown in FIG. 2, when no fuel element in the pressurized water reactor is damaged, -50 MBq/t can be used as the threshold for determining the degree of actinide contamination of the coolant.

In some embodiments, it is determined that no fuel element in the pressurized water reactor is damaged and the degree of actinide contamination of the coolant is low when FRI-XE is greater than -50 MBq/t and less than or equal to 50 MBq/t. It is determined that no fuel element in the pressurized water reactor is damaged but the degree of actinide contamination of the coolant is high when FRI-XE is less than or equal to -50 MBq/t.

In some embodiments of the present disclosure, sampling the coolant of the pressurized water reactor includes: obtaining a unit power of the pressurized water reactor; and sampling the coolant when the unit power is greater than 80%.

When the damage size of the fuel element is extremely small and the power of the damaged fuel element is very low, the inert gas released from the damaged fuel element into the coolant will also be very small, and the increment of the monitored Xe-133 activity will be relatively small, which may be masked by a error of sampling data or measurement error. Therefore, the power of the fuel element during sampling cannot be too low. In addition, the unit power of the pressurized water reactor is usually greater than 80% during normal operation. Considering the above two factors, the unit power of the pressurized water reactor should be greater than 80% during sampling. In this way, it can be ensured that the power of the fuel element is not too low and remains consistent with the unit power of the pressurized water reactor during normal operation, which makes the determination result more accurate.

In some embodiments of the present disclosure, the method for determining the integrity of fuel elements in a pressurized water reactor further includes: recording a unit power of the pressurized water reactor at a sampling moment; determining the coolant sample obtained by a present sampling as a valid sample on a condition that a difference between a presently recorded unit power and a unit power recorded at a previous sampling does not exceed a preset percentage; and determining the coolant sample obtained by the present sampling as an invalid sample on a condition that the difference between the presently recorded unit power and the unit power recorded at the previous sampling exceeds the preset percentage.

When the pressurized water reactor operates stably, the integrity of fuel elements in the pressurized water reactor can be determined more accurately through the specific activities of Xe-133 and Xe-138 in the coolant. However, when the pressurized water reactor operates unstably, the specific activity of Xe-133 in the coolant will change. Therefore, the sampling needs to be carried out when the pressurized water reactor operates stably. Whether the pressurized water reactor operates stably may be determined by the unit power of the pressurized water reactor.

In some embodiments, the unit power at the sampling moment may be recorded at the same time of sampling, and the presently recorded unit power may be compared with the unit power recorded at the previous sampling. The coolant sample obtained by the present sampling can be determined as a valid sample only when the difference between the two recorded unit powers does not exceed the preset percentage, otherwise it is an invalid sample. The determination method in the embodiment of the present disclosure cannot be implemented based on the data of invalid samples.

In some embodiments of the present disclosure, the preset percentage is 5%.

It is verified through experiments that when the change of the unit power of the pressurized water reactor does not exceed 5%, the change of the specific activity of Xe-133 in the coolant is negligible. Therefore, the preset percentage may be set to 5%. That is to say, when the difference between the two recorded unit powers does not exceed 5%, the coolant sample obtained by the present sampling may be determined as a valid sample. The determination method in the embodiment of the present disclosure can be implemented based on the data of valid samples.

The various technical features of the above embodiments can be combined arbitrarily. For the sake of concise description, all possible combinations of the various technical features in the above embodiments are not described. However, as long as there is no contradiction in the combination of these technical features, all of them should be considered as the scope recorded in this specification.

The above embodiments only express several implementation modes of the present disclosure, and the description thereof is relatively specific and detailed, but it cannot be understood as limiting the scope of the present disclosure. It should be pointed out that for those of ordinary skill in the art, several modifications and improvements can be made without departing from the concept of the present disclosure, and these all belong to the protection scope of the present disclosure. Therefore, the protection scope of the present disclosure shall be subject to the appended claims.

## Claims

1.  A method for determining integrity of fuel elements in a pressurized water reactor, comprising:

    sampling, during operation of a pressurized water reactor, a coolant of the pressurized water reactor to obtain specific activity of Xe-133 and specific activity of Xe-138 in a coolant sample;
    obtaining a fuel reliability index based on the specific activity of Xe-133 and the specific activity of Xe-138; and
    determining whether any fuel element in the pressurized water reactor is damaged based on the fuel reliability index.

2.  The method for determining the integrity of fuel elements in the pressurized water reactor according to claim 1, wherein obtaining the fuel reliability index based on the specific activity of Xe-133 and the specific activity of Xe-138 comprises:

    calculating FRI-XE according to a following formula, and taking the FRI-XE as the fuel reliability index:

    $$\text{FRI-XE} = [A_{133} - k_{138} \times A_{138}] \times [(L_n/LHGR) \times (100/P_0)]^{1.5},$$

wherein
FRI-XE refers to specific activity of Xe-133 in the coolant corrected for contributions of adhered actinides and power level and normalized to a standard linear power density, in MBq/t;
$A_{133}$ refers to specific activity of Xe-133 in the coolant equivalent to a non-degassed operating condition, in MBq/t;
$k_{138}$ refers to a correction coefficient of adhered actinides, dimensionless;
$A_{138}$ refers to specific activity of Xe-138 in the coolant, in MBq/t;
$L_n$ refers to the standard linear power density, taken as 180 W/cm;
LHGR refers to an average linear power density of the pressurized water reactor during full-power operation, in W/cm; and
$P_0$ refers to a reactor power when measuring the activity, expressed as a percentage.

3. The method for determining the integrity of fuel elements in the pressurized water reactor according to claim 2, wherein a value of the correction coefficient $k_{138}$ of the adhered actinides is 1.4.

4. The method for determining the integrity of fuel elements in the pressurized water reactor according to claim 2, wherein a value of the correction coefficient $k_{138}$ of the adhered actinides is one of 1.39, 1.41 and 1.42.

5. The method for determining the integrity of fuel elements in the pressurized water reactor according to claim 2, 3 or 4, wherein determining whether any fuel element in the pressurized water reactor is damaged based on the fuel reliability index comprises:

   comparing the fuel reliability index FRI-XE with a predetermined threshold; and
   determining that a fuel element in the pressurized water reactor is damaged when the FRI-XE is greater than the predetermined threshold.

6. The method for determining the integrity of fuel elements in the pressurized water reactor according to claim 5, further comprising determining that no fuel element in the pressurized water reactor is damaged when the FRI-XE is less than or equal to the predetermined threshold.

7. The method for determining the integrity of fuel elements in the pressurized water reactor according to claim 5, wherein the predetermined threshold is 50 MBq/t.

8. The method for determining the integrity of fuel elements in the pressurized water reactor according to claim 7, wherein the method further comprises:

   comparing the FRI-XE with 50000 MBq/t when the FRI-XE is greater than the predetermined threshold; and
   determining that the damage of the fuel elements in the pressurized water reactor is serious on a condition that the FRI-XE is greater than or equal to 50000 MBq/t.

9. The method for the integrity of fuel elements in the pressurized water reactor according to claim 7, wherein the method further comprises:

   comparing the FRI-XE with -50 MBq/t when the FRI-XE is less than or equal to the predetermined threshold; and
   determining that no fuel element in the pressurized water reactor is damaged and the degree of actinide contamination of the coolant is low on a condition that the FRI-XE is greater than -50 MBq/t.

10. The method for determining the integrity of fuel elements in the pressurized water reactor according to claim 9, further comprising determining that no fuel element in the pressurized water reactor is damaged but a degree of actinide contamination of the coolant is high on a condition that the FRI-XE is less than or equal to -50 MBq/t.

11. The method for determining the integrity of fuel elements in the pressurized water reactor according to claim 1, wherein sampling the coolant of the pressurized water reactor comprises:

   obtaining a unit power of the pressurized water reactor; and
   sampling the coolant when the unit power is greater than 80%.

12. The method for determining the integrity of fuel elements in the pressurized water reactor according to claim 1, wherein the method further comprises:

recording a unit power of the pressurized water reactor at a sampling moment; and

determining the coolant sample obtained by a present sampling as a valid sample on a condition that a difference between a presently recorded unit power and a unit power recorded at a previous sampling does not exceed a preset percentage.

13. The method for determining the integrity of fuel elements in the pressurized water reactor according to claim 12, further comprising:

determining the coolant sample obtained by the present sampling as an invalid sample on a condition that the difference between the presently recorded unit power and the unit power recorded at the previous sampling exceeds the preset percentage.

14. The method for determining the integrity of fuel elements in the pressurized water reactor according to claim 12, further comprising:

determining the coolant sample obtained by the present sampling as a valid sample on a condition that the difference between the two recorded unit powers does not exceed the preset percentage.

15. The method for determining the integrity of fuel elements in the pressurized water reactor according to claim 13, wherein the preset percentage is 5%.

During operation of a pressurized water reactor, sampling a coolant of the pressurized water reactor to obtain specific activity of Xe-133 and specific activity of Xe-138 in a coolant sample — S10

Obtaining a fuel reliability index based on the specific activity of Xe-133 and the specific activity of Xe-138 — S20

Determining whether any fuel element in the pressurized water reactor is damaged based on the fuel reliability index — S30

FIG. 1

FIG. 2

## INTERNATIONAL SEARCH REPORT

| International application No. |
|---|
| **PCT/CN2024/104427** |

### A. CLASSIFICATION OF SUBJECT MATTER

G21C17/02(2006.01)i; G21C17/10(2006.01)i

According to International Patent Classification (IPC) or to both national classification and IPC

### B. FIELDS SEARCHED

Minimum documentation searched (classification system followed by classification symbols)

G21C17 (IPC)

Documentation searched other than minimum documentation to the extent that such documents are included in the fields searched

Electronic data base consulted during the international search (name of data base and, where practicable, search terms used)

CNTXT, ENTXTC, DWPI: 压水反应堆, 燃料元件, 组件, 完整性, 破损, 泄露, 氙, 活度, 监测, 检测, pressurized water reactor, fuel rod, fuel element, assembly, integrity, damage+, leakage, xe, xenon, activity, detect+

### C. DOCUMENTS CONSIDERED TO BE RELEVANT

| Category* | Citation of document, with indication, where appropriate, of the relevant passages | Relevant to claim No. |
|---|---|---|
| PX | CN 117174353 A (CHINA NUCLEAR POWER TECHNOLOGY RESEARCH INSTITUTE CO., LTD. et al.) 05 December 2023 (2023-12-05) claims 1-10, description, paragraphs 0055-0102, and figures 1-2 | 1-15 |
| X | CN 114936344 A (SHANDONG NUCLEAR POWER CO., LTD.) 23 August 2022 (2022-08-23) description, paragraphs 0008-0087 | 1-11 |
| Y | CN 114936344 A (SHANDONG NUCLEAR POWER CO., LTD.) 23 August 2022 (2022-08-23) description, paragraphs 0008-0087 | 12-15 |
| Y | CN 116153539 A (CHINA NUCLEAR POWER TECHNOLOGY RESEARCH INSTITUTE CO., LTD. et al.) 23 May 2023 (2023-05-23) description, paragraph 0057 | 12-15 |
| A | CN 114300165 A (HUANENG NUCLEAR ENERGY TECHNOLOGY RESEARCH INSTITUTE CO., LTD. et al.) 08 April 2022 (2022-04-08) entire document | 1-15 |

☑ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **22 October 2024** | **23 October 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**EP 4 787 388 A1**

**INTERNATIONAL SEARCH REPORT**

| | International application No. |
|---|---|
| | **PCT/CN2024/104427** |

**C.    DOCUMENTS CONSIDERED TO BE RELEVANT**

| Category* | Citation of document, with indication, where appropriate, of the relevant passages | Relevant to claim No. |
|---|---|---|
| A | CN 110729062 A (YANGJIANG NUCLEAR POWER CO., LTD. et al.) 24 January 2020 (2020-01-24)<br>    entire document | 1-15 |
| A | CN 110245392 A (SHANGHAI JIAO TONG UNIVERSITY) 17 September 2019 (2019-09-17)<br>    entire document | 1-15 |
| A | CN 110033873 A (GUANGXI FANGCHENGGANG NUCLEAR POWER CO., LTD. et al.) 19 July 2019 (2019-07-19)<br>    entire document | 1-15 |
| A | CN 111128419 A (FUJIAN FUQING NUCLEAR POWER CO., LTD.) 08 May 2020 (2020-05-08)<br>    entire document | 1-15 |
| A | US 3786257 A (WESTINGHOUSE ELECTRIC CORP.) 15 January 1974 (1974-01-15)<br>    entire document | 1-15 |

Form PCT/ISA/210 (second sheet) (July 2022)

12

## INTERNATIONAL SEARCH REPORT
### Information on patent family members

International application No.

**PCT/CN2024/104427**

| Patent document cited in search report | | | Publication date (day/month/year) | Patent family member(s) | | | Publication date (day/month/year) |
|---|---|---|---|---|---|---|---|
| CN | 117174353 | A | 05 December 2023 | None | | | |
| CN | 114936344 | A | 23 August 2022 | None | | | |
| CN | 116153539 | A | 23 May 2023 | None | | | |
| CN | 114300165 | A | 08 April 2022 | None | | | |
| CN | 110729062 | A | 24 January 2020 | None | | | |
| CN | 110245392 | A | 17 September 2019 | None | | | |
| CN | 110033873 | A | 19 July 2019 | None | | | |
| CN | 111128419 | A | 08 May 2020 | None | | | |
| US | 3786257 | A | 15 January 1974 | FR | 2148575 | A1 | 23 March 1973 |
| | | | | FR | 2148575 | B1 | 01 April 1977 |
| | | | | CH | 557078 | A | 13 December 1974 |
| | | | | IT | 963913 | B | 21 January 1974 |
| | | | | GB | 1344216 | A | 16 January 1974 |
| | | | | DE | 2236252 | A1 | 22 February 1973 |
| | | | | NL | 7210993 | A | 14 February 1973 |
| | | | | JPS | 4827197 | A | 10 April 1973 |
| | | | | JPS | 5143160 | B2 | 19 November 1976 |
| | | | | BE | 787440 | A | 12 February 1973 |
| | | | | CA | 950131 | A | 25 June 1974 |

Form PCT/ISA/210 (patent family annex) (July 2022)

**EP 4 787 388 A1**

## REFERENCES CITED IN THE DESCRIPTION

### Patent documents cited in the description

- CN 202311260292